# FASCICULE DE BREVET EUROPEEN

(11) **EP 3 110 644 B1**
(45) Date de publication et mention de la délivrance du brevet: **11.07.2018**
(21) Numéro de dépôt: 15704339.9
(22) Date de dépôt: 15.01.2015
(51) Int. Cl.: B60K 5/12, B62D 21/15, B60R 19/00

(54) **VEHICULE AUTOMOBILE MUNI D'UN SYSTEME DE RETENUE DU GROUPE MOTOPROPULSEUR EN CAS DE CHOC**
KRAFTFAHRZEUG MIT EINEM SYSTEM ZUM ZURÜCKHALTEN DES ANTRIEBSTRANGS IM FALLE EINES AUFPRALLS
MOTOR VEHICLE PROVIDED WITH A SYSTEM FOR HOLDING BACK THE POWERTRAIN IN THE EVENT OF IMPACT

(30) Priorité: 26.02.2014 FR 1451535
(43) Date de publication de la demande: 04.01.2017
(73) Titulaire: PSA Automobiles SA, 78300 Poissy (FR)
(72) Inventeur: DAUTRY, Cédric, 25230 Dasle (FR)
(74) Mandataire: Renous Chan, Véronique
(86) Numéro de dépôt international: PCT/FR2015/050104
(87) Numéro de publication internationale: WO 2015/128553

(56) Documents cités:
- DE-A1- 4 230 669
- US-A- 5 267 630
- US-B1- 6 276 484

## Description

La présente invention porte sur un véhicule automobile muni d'un système de retenue du groupe motopropulseur en cas de choc, ainsi que sur le système de retenue correspondant.

Pour améliorer la sécurité, les véhicules automobiles subissent des essais de chocs dans des conditions spécifiques qui représentent différents types d'accidents pouvant se produire, pour notamment chercher à protéger les passagers des blessures.

Ces essais comprennent en particulier des chocs sous différents angles sur la partie avant du véhicule, ce qui représente les accidents les plus fréquents, ces chocs se répercutant sur le groupe motopropulseur dans le cas où celui-ci se trouve dans le compartiment avant du véhicule. L'habitacle étant situé juste derrière le groupe motopropulseur, il est important pour ce type de véhicule de vérifier le cheminement du groupe motopropulseur représentant un ensemble lourd et rigide qui peut reculer lors du choc. On s'efforce pour cela de prévoir les différentes déformations des composants du véhicule, pour que le groupe motopropulseur lors d'un choc avant soit guidé pendant son recul de manière à éviter une intrusion dans cet habitacle qui le déformerait fortement.

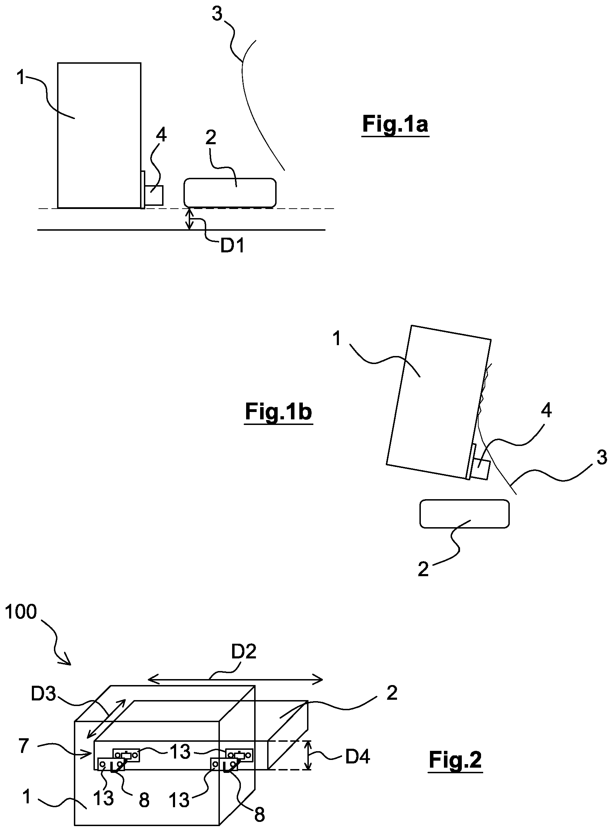

Dans le cas d'une architecture moteur suspendue connue en soi, une première main, dite main droite (les termes "gauche" et "droite" sont indiqués tels que les percevrait un occupant situé à la place du conducteur) assure la liaison du groupe motopropulseur 1 (cf. figure 1a) au brancard droit du véhicule via une pièce constituée d'un élastomère. Une deuxième main, dite main gauche, relie la boîte de vitesses au brancard gauche du véhicule. Une troisième zone d'appui pourra être constituée par une biellette anti-couple en relation avec la partie inférieure du groupe motopropulseur 1.

Par ailleurs, une pièce de renfort dénommée berceau 2 s'étend entre les deux brancards transversalement par rapport à une direction d'allongement longitudinale du véhicule. Ce berceau 2 destiné à supporter une transmission du véhicule assure également un rôle de renfort transversal du véhicule. Ce berceau 2 pourra comporter une barre anti-devers encastrée reliée aux bras de suspension. Le berceau 2 est positionné longitudinalement entre le groupe motopropulseur 1 et un tablier 3 assurant une séparation entre le groupe motopropulseur 1 et un habitacle du véhicule.

Dans une telle architecture, l'ajout d'une pièce appelée impacteur 4, fixée en partie inférieure du groupe motopropulseur 1, permet d'améliorer le scénario de choc. En effet, lors du choc, le groupe motopropulseur 1 se rapproche du berceau 2 situé entre le tablier 3 et le groupe motopropulseur 1 et a tendance à remonter. Le contact, via l'impacteur 4 sur une zone basse du berceau 2 permet au groupe motopropulseur 1 d'accrocher le berceau 2, ce qui lui évite de finir sa course dans le tablier 3.

Toutefois, il n'est pas toujours possible de placer l'impacteur 4 à un niveau suffisamment bas pour garantir un choc avec le berceau 2, en raison notamment d'une garde au sol D1 imposée qui peut être importante. En outre, le berceau 2 peut ne pas être suffisamment épais pour permettre un contact avec l'impacteur 4, en sorte qu'il existe un risque de collision entre le groupe motopropulseur 1 et le tablier 3, comme cela est illustré à la figure 1b.

Le document FR2979079 décrit un véhicule automobile comportant un groupe motopropulseur, ainsi qu'une pièce de renfort appelée berceau d'orientation transversale par rapport à une direction d'allongement longitudinale du véhicule, ledit berceau étant positionné entre ledit groupe motopropulseur et un tablier assurant une séparation entre ledit groupe motopropulseur et un habitacle du véhicule, le véhicule comportant en outre un système de retenue du groupe motopropulseur en cas de choc assurant une liaison mécanique entre ledit groupe motopropulseur et ledit berceau, ledit système de retenue comportant au moins deux câbles reliés chacun d'une part audit groupe motopropulseur et d'autre part audit berceau.

Par ailleurs, le document US5 267 630 enseigne de mettre en place des câbles reliant d'une part une face latérale du groupe motopropulseur et d'autre part un côté de longerons portant le moteur (on parle alors de structure porteuse). Toutefois, un tel système ne peut pas être utilisé dans une structure suspendue du moteur dépourvue de longerons. Le document DE 42 30 669 décrit un cadre de châssis avec des entretoises longitudinales qui se déforment en cas d'impact. Le document US 6 276 484 décrit un élément d'impact sous forme d'une barre allongée généralement en forme de C avec ses extrémités fixées au moteur.

L'invention vise à remédier efficacement aux inconvénients précités en proposant un véhicule automobile selon la revendication 1.

L'invention permet ainsi d'améliorer la sécurité des occupants du véhicule en limitant les risques d'intrusion du groupe motopropulseur dans l'habitacle. En outre, l'invention permet un gain de masse sur le véhicule avec la suppression d'éventuels renforts de tablier. L'invention est également adaptable à tout type d'architecture (suspendue ou porteuse) munie d'un berceau de renfort situé entre le groupe motopropulseur et le tablier du véhicule. En outre, le montage du système de retenue est aisé via un accès sous la voiture à la zone de fixation par rapport à la mise en place du câble tendu décrit dans le document FR2979079.

Selon une réalisation, chaque serre-câble présente une forme en U.

Selon une réalisation, des extrémités libres dudit serre-câble sont filetées et fixées sur ledit support au moyen d'écrous.

Selon une réalisation, chaque support présente globalement une forme en oméga dont les branches d'extrémité comportent chacune au moins une ouverture autorisant le passage d'un moyen de fixation.

Selon une réalisation, chaque serre-câble est fixé sur une paroi dudit support sensiblement parallèle auxdites branches d'extrémité.

Selon une réalisation, ledit système de retenue est configuré en sorte qu'en situations de vie hors choc, lesdits câbles sont détendus.

Selon une réalisation, en situations de vie hors choc, les câbles présentent une forme de cuvette dont un fond est orienté dans une direction opposée au groupe motopropulseur. Cela permet de limiter le débattement du groupe motopropulseur lors du choc.

Selon une réalisation, lesdits serre-câbles présentent une forme en U.

Selon une réalisation, ledit support présente globalement une forme en oméga Ω dont des branches d'extrémité comportent chacune au moins une ouverture autorisant le passage d'un moyen de fixation.

L'invention s'applique à un groupe motopropulseur appartenant à une architecture moteur dite suspendue. Dans ce type d'architecture, on a généralement une une première main, dite main droite, qui assure la liaison du groupe motopropulseur au brancard droit du véhicule via une pièce constituée d'un élastomère, et une deuxième main, dite main gauche, qui relie une boîte de vitesses au brancard gauche du véhicule.

L'invention sera mieux comprise à la lecture de la description qui suit et à l'examen des figures qui l'accompagnent. Ces figures ne sont données qu'à titre illustratif mais nullement limitatif de l'invention.

Les figures 1a et 1b représentent la partie avant d'un véhicule automobile vue de côté respectivement avant et après un choc pour un groupe motopropulseur muni d'un impacteur selon l'état de la technique;

La figure 2 est une vue en perspective du groupe motopropulseur et du berceau d'un véhicule reliés ensemble par l'intermédiaire d'un système de retenue du groupe motopropulseur selon la présente invention;

Les figures 3a et 3b représentent respectivement des vues de côté et de dessus d'un sous-ensemble du système de retenue du groupe motopropulseur selon la présente invention.

Les figures 4a et 4b représentent la partie avant d'un véhicule automobile vue de côté respectivement avant et après un choc pour un groupe motopropulseur muni d'un système anti-remonté selon la présente invention;

Les éléments identiques, similaires, ou analogues conservent la même référence d'une figure à l'autre.

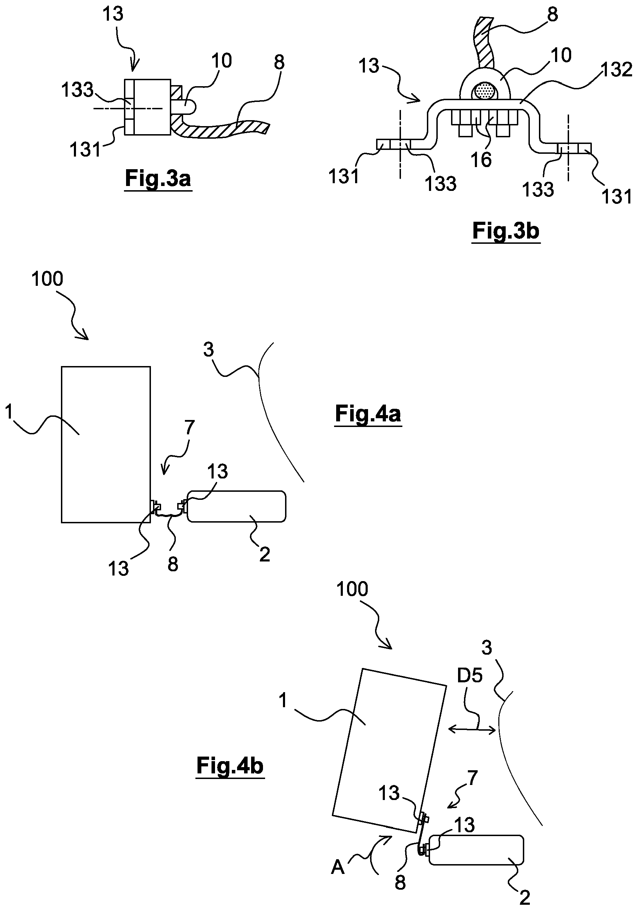

Les figures 2, 4a et 4b montrent l'avant 100 d'un véhicule automobile comportant un groupe motopropulseur 1. Pour un véhicule thermique, il s'agit du moteur avec ses accessoires, des éléments gérant les paramètres de combustion, ainsi que de la boîte de vitesses.

Ce groupe motopropulseur 1 appartient de préférence à une architecture moteur dite suspendue dans laquelle une première main, dite main droite, assure la liaison du groupe motopropulseur 1 au brancard droit du véhicule via une pièce constituée d'un élastomère. Une deuxième main, dite main gauche, relie la boîte de vitesses au brancard gauche du véhicule. Une troisième zone d'appui pourra être constituée par une biellette anti-couple en relation avec la partie inférieure du groupe motopropulseur 1. En variante, l'invention pourra également être mise en oeuvre avec une architecture dite porteuse dans laquelle le groupe motopropulseur 1 repose sur des pièces d'allongement longitudinal et dans laquelle on utilise un berceau 2.

Ce berceau 2, bien visible sur la figure 2, s'étend transversalement entre les deux brancards par rapport à une direction d'allongement longitudinale du véhicule. Ce berceau 2 destiné à supporter une transmission du véhicule, telle qu'une transmission à crémaillère, assure également un rôle de renfort transversal du véhicule. Le berceau 2 est positionné longitudinalement entre le groupe motopropulseur 1 et un tablier 3 assurant une séparation entre le groupe motopropulseur 1 et un habitacle du véhicule.

Ce berceau 2 pourra en outre comporter une barre anti-devers encastrée reliée aux bras de suspension. Le berceau 2 pourra par exemple être formé à partir de deux coquilles de tôle soudées entre elles. Dans un exemple, le berceau 2 s'étend suivant sensiblement toute la largeur du véhicule suivant une longueur D2 de l'ordre de 150cm. Le berceau 2 s'étend par ailleurs suivant la direction longitudinale du véhicule sur une largeur D3 de l'ordre de 40cm et présente par exemple une épaisseur D4 de l'ordre de 10cm.

Un système de retenue 7 du groupe motopropulseur 1 en cas de choc assure une liaison mécanique entre le groupe motopropulseur 1 et le berceau 2. A cet effet, le système de retenue 7 comporte au moins deux câbles 8 reliés d'une part au groupe motopropulseur 1 et d'autre part au berceau 2. Chaque câble 8 est fixé sur une face du groupe motopropulseur 1 et une face du berceau 2 situées en regard l'une de l'autre. Les câbles 8 sont sensiblement parallèles l'un par rapport à l'autre et situés au niveau des extrémités des faces sur lesquelles ils sont fixés.

Comme cela est illustré aux figures 3a et 3b, chaque câble 8 est maintenu à chacune de ses extrémités par un serre-câble 10 monté sur un support 13. Plus précisément, chaque support 13 est destiné à être fixé, suivant sa position, au berceau 2 ou au groupe motopropulseur 1. Chaque support 13 présente globalement une forme en oméga dont les branches d'extrémité 131 comportent chacune au moins une ouverture 133 autorisant le passage d'un moyen de fixation, constitué par exemple par une vis. En variante, ces moyens de fixation pourront être constitués par des rivets ou tout autre moyen de fixation adapté. Le support 13 pourra être formé à partir d'une plaque métallique emboutie.

Par ailleurs, chaque serre-câble 10 présente une forme en U dont les extrémités libres sont filetées et fixées sur le support 13 au moyen d'écrous 16. Chaque serre-câble 10 est fixé en l'occurrence sur une paroi 132 du support 13 sensiblement parallèle aux branches d'extrémité 131, en sorte que chaque extrémité de câble 8 est maintenue coincée entre le serre-câble 10 et cette face du support 13.

Comme on peut le voir à la figure 4a, le système de retenue 7 est configuré en sorte qu'en situations de vie hors choc, lesdits câbles 8 sont détendus. Les câbles 8 présentent alors une forme de cuvette dont le fond est orienté vers le bas, c'est-à-dire dans une direction opposée au groupe motopropulseur 1. Cela permet de limiter le débattement du groupe motopropulseur 1 lors du choc. Une longueur des câbles 8 est définie en fonction des débattements du groupe motopropulseur 1 en situations de vie hors-choc.

Comme cela est illustré à la figure 4b, lors d'un choc, le groupe motopropulseur 1 commence sa remontée et son avancée en direction du tablier 3 suivant la flèche A. Les deux câbles 8 du système de retenue 7 se tendent et commencent à travailler en traction. Les câbles 8 permettent ainsi de retenir le groupe motopropulseur 1 à proximité du berceau 2. Le groupe motopropulseur 1 est ainsi maintenu à distance (cf. référence D5), ce qui permet de le préserver.

## Revendications

1. Véhicule automobile comportant un groupe motopropulseur (1) appartenant à une architecture moteur suspendue, ainsi qu'une pièce de renfort appelée berceau (2) d'orientation transversale par rapport à une direction d'allongement longitudinale du véhicule, ledit berceau (2) étant positionné entre ledit groupe motopropulseur (1) et un tablier (3) assurant une séparation entre ledit groupe motopropulseur (1) et un habitacle du véhicule, le véhicule comportant en outre un système de retenue (7) du groupe motopropulseur (1) en cas de choc assurant une liaison mécanique entre ledit groupe motopropulseur (1) et ledit berceau (2), ledit système de retenue (7) comportant au moins deux câbles (8) reliés chacun d'une part audit groupe motopropulseur (1) et d'autre part audit berceau (2), chaque câble (8) étant maintenu à chacune de ses extrémités par un serre-câble (10) monté sur un support (13), ledit support (13) étant destiné à être fixé, suivant sa position, audit berceau (2) ou audit groupe motopropulseur (1).

2. Véhicule automobile selon la revendication précédente, **caractérisé en ce que** ledit véhicule comprend un brancard droit et un brancard gauche et une boîte de vitesses, ledit groupe motopropulseur (1) appartenant à une architecture moteur dite suspendue, dans laquelle, notamment, une première main, dite main droite, assure la liaison du groupe motopropulseur (1) au brancard droit du véhicule via une pièce constituée d'un élastomère, une deuxième main, dite main gauche, relie une boîte de vitesses au brancard gauche du véhicule.

3. Véhicule automobile selon l'une des revendications précédentes, **caractérisé en ce que** chaque serre-câble (10) présente une forme en U.

4. Véhicule automobile selon la revendication précédente, **caractérisé en ce que** des extrémités libres dudit serre-câble (10) sont filetées et fixées sur ledit support (13) au moyen d'écrous (16).

5. Véhicule automobile selon l'une quelconque des revendications précédentes, **caractérisé en ce que** chaque support (13) présente globalement une forme en oméga dont les branches d'extrémité (131) comportent chacune au moins une ouverture (133) autorisant le passage d'un moyen de fixation.

6. Véhicule automobile selon la revendication précédente, **caractérisé en ce que** chaque serre-câble (10) est fixé sur une paroi (132) dudit support (13) sensiblement parallèle auxdites branches d'extrémité (131).

7. Véhicule automobile selon l'une quelconque des revendications précédentes, **caractérisé en ce que** ledit système de retenue (7) est configuré en sorte qu'en situations de vie hors choc, lesdits câbles (8) sont détendus.

8. Véhicule selon l'une quelconque des revendications précédentes, **caractérisé en ce qu'**en situations de vie hors choc, lesdits câbles (8) présentent une forme de cuvette dont un fond est orienté dans une direction opposée au groupe motopropulseur (1).

## Patentansprüche

1. Kraftfahrzeug, das einen Antriebsstrang (1) umfasst, der zu einem aufgehängten Motoraufbau gehört, sowie ein Verstärkungsteil (2), Motoraufhängung genannt, mit Querausrichtung in Bezug auf eine Längsausdehnungsrichtung des Fahrzeugs, wobei die Motoraufhängung (2) zwischen dem Antriebsstrang (1) und einer Stirnwand (3), die eine Trennung zwischen dem Antriebsstrang (1) und einer Fahrgastzelle des Fahrzeugs sicherstellt, positioniert ist, wobei das Fahrzeug außerdem ein System zum Zurückhalten (7) des Antriebsstrangs (1) im Fall eines Aufpralls umfasst, das eine mechanische Verbindung zwischen dem Antriebsstrang (1) und der Motoraufhängung (2) sicherstellt, wobei das System zum Zurückhalten (7) mindestens zwei Kabel (8) umfasst, die jeweils mit einem Teil des Antriebsstrangs (1) und andererseits mit der Motoraufhängung (2) verbunden sind, wobei jedes Kabel (8) an jedem seiner Enden von einer Kabelklemme (10) gehalten wird, die auf einen Träger (13) montiert ist, wobei der Träger (13) dazu bestimmt ist, je nach seiner Position an der Motoraufhängung (2) oder an dem Antriebsstrang (1) befestigt zu sein.

2. Kraftfahrzeug nach dem vorhergehenden Anspruch, **dadurch gekennzeichnet, dass** das Fahrzeug einen rechten und einen linken Längsträger und ein Schaltgetriebe umfasst, wobei der Antriebsstrang (1) zu einem Motoraufbau, der aufgehängt genannt wird, gehört, wobei insbesondere eine erste Hand, rechte Hand genannt, die Verbindung des Antriebsstrangs (1) mit dem rechten Längsträger des Fahrzeugs über ein Teil, das aus Elastomer besteht, sicherstellt, eine zweite Hand, linke Hand genannt, die ein Schaltgetriebe mit dem linken Längsträger des Fahrzeugs verbindet.

3. Kraftfahrzeug nach einem der vorhergehenden Ansprüche, **dadurch gekennzeichnet, dass** die Kabelklemme (10) eine U-Form aufweist.

4. Kraftfahrzeug nach dem vorhergehenden Anspruch, **dadurch gekennzeichnet, dass** freie Enden der Kabelklemme (10) ein Innengewinde aufweisen und an dem Träger (13) mittels Muttern (16) befestigt sind.

5. Kraftfahrzeug nach einem der vorhergehenden Ansprüche, **dadurch gekennzeichnet, dass** jeder Träger (13) insgesamt eine Form eines Omega aufweist, dessen Endschenkel (131) jeweils mindestens eine Öffnung (133), die das Durchgehen eines Befestigungsmittels erlaubt, umfassen.

6. Kraftfahrzeug nach dem vorhergehenden Anspruch, **dadurch gekennzeichnet, dass** jede Kabelklemme (10) auf einer Wand (132) des Trägers (13) im Wesentlichen parallel zu den Endschenkeln (131) befestigt ist.

7. Kraftfahrzeug nach einem der vorhergehenden Ansprüche, **dadurch gekennzeichnet, dass** das System zum Zurückhalten (7) derart ausgelegt ist, dass in Lebenssituationen außer Aufprall die Kabel (8) schlaff sind.

8. Fahrzeug nach einem der vorhergehenden Ansprüche, **dadurch gekennzeichnet, dass** in Lebenssituationen außer Aufprall die Kabel (8) eine Form einer Schale aufweisen, deren Grund in eine Richtung entgegengesetzt zu dem Antriebsstrang (1) ausgerichtet ist.

## Claims

1. A motor vehicle comprising a powertrain (1) belonging to a suspended engine architecture, and also a reinforcement part designated a cradle (2) of transverse orientation with respect to a longitudinal extension direction of the vehicle, said cradle (2) being positioned between said powertrain (1) and an apron (3) ensuring a separation between said powertrain (1) and a passenger compartment of the vehicle, the vehicle further comprising a system (7) for holding back the powertrain (1) in the event of impact ensuring a mechanical connection between said powertrain (1) and said cradle (2), said holding-back system (7) comprising at least two cables (8) each connected on the one hand to said powertrain (1) and on the other hand to said cradle (2), each cable (8) being held at each of its ends by a cable clamp (10) mounted on a support (13), said support (13) being intended to be fixed, according to its position, to said cradle (2) or to said powertrain (1).

2. The motor vehicle according to the preceding claim, **characterized in that** said vehicle includes a right side rail and a left side rail and a gearbox, said powertrain (1) belonging to an engine architecture designated as suspended, in which, in particular, a first arm, designated right arm, ensures the connection of the powertrain (1) to the right side rail of the vehicle via a part made from an elastomer, a second arm, designated left arm, connects a gearbox to the left side rail of the vehicle.

3. The motor vehicle according to one of the preceding claims, **characterized in that** each cable clamp (10) is U-shaped.

4. The motor vehicle according to the preceding claim, **characterized in that** free ends of said cable clamp (10) are threaded and fixed on said support (13) by means of nuts (16).

5. The motor vehicle according to any one of the preceding claims, **characterized in that** each support (13) has overall an omega shape, the end branches (131) of which each comprise at least one opening (133) permitting the passage of a fixing means.

6. The motor vehicle according to the preceding claim, **characterized in that** each cable clamp (10) is fixed on a wall (132) of said support (13) substantially parallel to said end branches (131).

7. The motor vehicle according to any one of the preceding claims, **characterized in that** said holding-back system (7) is configured such that in life situations except impact, said cables (8) are slack.

8. The vehicle according to any one of the preceding claims, **characterized in that** in life situations except impact, said cables (8) are dish-shaped, a base of which is oriented in a direction opposite to the powertrain (1).
